# EUROPÄISCHE PATENTANMELDUNG

(11) **EP 1 643 155 A1**
(43) Veröffentlichungstag der Anmeldung: **05.04.2006**
(21) Anmeldenummer: 04738227.0
(22) Anmeldetag: 11.06.2004
(51) Int. Cl.: F16F 3/12, F16F 3/02

(54) **VERBUNDFEDER**

(30) Priorität: 11.06.2003 CN 03112550
(71) Anmelder: Yin, Xuejun, Room 1812, Yangguang Bldg., Shandong 266071 (CN)
(72) Erfinder: Yin, Xuejun, Room 1812, Yangguang Bldg., Shandong 266071 (CN)
(74) Vertreter: Schubert, Klemens
(86) Internationale Anmeldenummer: PCT/CN2004/000629
(87) Internationale Veröffentlichungsnummer: WO 2004/109147

(57) **Zusammenfassung**

Die Erfindung betrifft eine zusammengesetzte Feder, die aus der eigentlichen Feder und einem Dämpfungskörper besteht, welcher das Dämpfungsmaterial enthält und eine dämpfende Wirkung gegen die Bewegung der Feder hat. Dadurch, dass die zusammengesetzte Feder einen Dämpfungskörper enthält, verformt sich dieser, wenn die Feder unter äußerer Kraft schwingt, so dass starke innere Reibung im Dämpfungsmaterial erzeugt und die Energie der Schwingung in Thermoenergie umgewandelt und verbraucht wird. Hierdurch klingt die Schwingung schnell ab. Der Körperschall wird durch die hohe Dämpfung reduziert.

## Beschreibung

Die Erfindung betrifft eine Feder. Übliche Federn bestehen aus einfachem, elastischem Material, dessen Dämpfung niedrig ist, besonders bei Federn aus Metall. Um die Dämpfung zu erhöhen, werden Federn in der Praxis gelegentlich mit Gummirohr ummantelt oder eine Gummischicht auf die Außenfläche der Feder vulkanisiert. Eigentlich ist Gummi ein visko-elastisches Material, das eine gewisse Dämpfungswirkung im hohen Frequenzbereich hat, z. B. im Hinblick Schwingungen und Geräusch im Tonfrequenzbereich. Für mechanische Schwingungen beträgt der Dämpfungsgrad jedoch nur 1% - 3%. Die Dämpfung ist noch geringer, wenn Gummi parallel zu einer Feder geschaltet wird. Für viele Anwendungsfälle, z.B. für die Schwingungsdämpfung beziehungsweise die Schwingungsisolierung von Maschinen und Fahrzeugen, wo vorzugsweise ein Dämpfungsgrad zwischen 10% und 30% erforderlich ist, reicht diese Dämpfung jedoch nicht aus. Dafür wird ein gesonderter Dämpfer benötiget, was den Aufbau kompliziert macht.

Aufgabe der Erfindung ist es, die oben genannten Mängel zu beseitigen und eine Feder mit integrierter Dämpfungswirkung bereitzustellen.

Um das oben genannte Ziel zu erreichen, schlägt die Erfindung eine Feder vor, die dadurch gekennzeichnet ist, dass die Feder mit einem Dämpfungskörper kombiniert ist, wobei der Dämpfungskörper aus Dämpfungsmaterial besteht, welches eine dämpfende Wirkung in Bezug auf die Bewegung der Feder hat. Vorzugsweise soll das Dämpfungsmaterial eine hohe Dämpfung haben, wobei als Dämpfungsmaterial insbesondere visko-elastisches Material mit hoher Dämpfung oder visko-plastisches Material, z.B. Gummi mit hoher Dämpfung, Polyurethane mit hoher Dämpfung oder modifiziertes Bitumen mit hoher Dämpfung in Betracht kommen. Die Materialdämpfung derartigen Dämpfungsmaterials kann 30% - 50% erreichen. Der Verlustfaktor normalen elastischen Materials dagegen liegt nur zwischen 0,1 % und 1% und der Verlustfaktor üblichen Gummis beträgt ca. 1%-3%. Es ist weiter bevorzugt, wenn in dem Dämpfungsmaterial Zusätze enthalten sind, welche einen höheren Verformungswiderstand, mehr innere Reibung und Dämpfung hervorrufen, z.B. Kohlefaser, Fiberglas und Glimmerpulver.

Vorzugsweise soll mindestens ein Teil der Feder in den Dämpfungskörper eingebettet sein.

Der oben genannte Dämpfungskörper kann ein massiver Zylinder oder ein hohler Zylinder sein.

Die eigentliche Feder kann gemäß der Erfindung eine beliebige Feder sein, z.B. eine Spiralfeder oder eine Tellerfeder. Wenn die Feder eine Spiralfeder ist, kann zwischen den Federdrähten ein Hohlraum oder ein weiches elastisches Material vorgesehen sein. Sofern es sich bei der Feder um eine Tellerfeder handelt, können ringförmige Hohlräume oder ein weiches elastisches Material ringförmig zwischen den Federscheiben sowie ober- und unterhalb der Federscheiben vorgesehen sein.

Vorzugsweise können Schubwiderstandskörper mit großer Steifigkeit um den Dämpfungskörper angeordnet oder in den Dämpfungskörper eingebracht werden. Die Schubwiderstandskörper können die Verformung des Dämpfungskörpers erschweren und den Scherverformungsanteil des Dämpfungskörpers erhöhen. Vorzugsweise ist der so genannte Schubwiderstandskörper ein spiralförmiger Ring oder eine Hülse.

Vorzugsweise wird eine Schicht hochfesten, elastischen Materials auf die Außenfläche des Dämpfungskörpers aufgebracht. Die Feder mit dem hochdämpfenden Material weist auch bei der Entlastung eine Dämpfung auf, welche die Rückstellung der Feder und des hochdämpfenden Materials behindert. Die Festigkeit des hochdämpfenden Materials ist normalerweise niedriger als die des elastischen Materials auf selber Basis, so dass die aufgebrachte hochfeste elastische Außenschicht sich bei der Rückstellung des Dämpfungsmaterials vorteilhaft auswirkt. Außerdem schützt die Außenschicht vor Beschädigung, z.B. infolge von Reibung und/oder Stoß.

Vorzugsweise kann das dämpfende Material nur auf einen Teil der Außenfläche der Spiralfeder oder der Tellerfeder aufgebracht werden. Zusätzlich kann mindestens eine Schubwiderstandsschicht mit höherer Steifigkeit auf die Dämpfungsschicht aufgebracht werden. Vorzugsweise können mehrere Federn in Reihe oder parallel geschaltet werden.

Die zusammengesetzte Feder selbst umfasst die eigentliche Feder und den Dämpfungskörper. Wenn die Feder unter äußerer Kraft schwingt und sich verformt, verformt sich auch der Dämpfungskörper. Die innere Reibung im Dämpfungsmaterial zehrt dabei die äußere Energie auf, so dass die Verformung behindert wird und Schwingungen geschwächt werden. Außerdem wird der durch die Schwingungen hervorgerufene Körperschall reduziert. Erfindungsgemäß wird Dämpfungsmaterial mit hoher Dämpfung verwendet, so dass eine höhere Dämpfung erzielt wird, wie sie für die Schwingungsisolation der meisten Maschinenanlagen und Fahrzeuge erwünscht ist. Im Fall dessen, dass ein sehr hoher Dämpfungsgrad gefordert wird, kann eine kleinere Zusatzdämpfung parallel geschaltet werden. Im Normalfall ist jedoch eine Zusatzdämpfung nicht erforderlich, so dass sich dadurch der Aufbau vereinfacht. Außerdem kann die erfindungsgemäße Ausbildung der Feder deren Eigenresonanzschwingungen dämpfen.

### Erklärung der Figuren:

- Fig. 1:: Skizze der Gesamtstruktur von Ausführungsbeispiel 1;
- Fig. 2:: Skizze der Gesamtstruktur von Ausführungsbeispiel 2;
- Fig. 3:: Skizze der Gesamtstruktur von Ausführungsbeispiel 3;
- Fig. 4:: Skizze der Gesamtstruktur von Ausführungsbeispiel 4;
- Fig. 5:: Skizze der Gesamtstruktur von Ausführungsbeispiel 5;
- Fig. 6:: Skizze der Gesamtstruktur von Ausführungsbeispiel 6;
- Fig. 7:: Skizze der Gesamtstruktur von Ausführungsbeispiel 7;
- Fig. 8:: Skizze der Gesamtstruktur von Ausführungsbeispiel 8;
- Fig. 9:: Skizze der Gesamtstruktur von Ausführungsbeispiel 9;
- Fig. 10:: Skizze der Gesamtstruktur von Ausführungsbeispiel 10;
- Fig. 11:: Skizze der Gesamtstruktur von Ausführungsbeispiel 11;
- Fig. 12:: Skizze der Gesamtstruktur von Ausführungsbeispiel 12;
- Fig. 13:: Skizze der Gesamtstruktur von Ausführungsbeispiel 13;
- Fig. 14:: Skizze der Gesamtstruktur von Ausführungsbeispiel 14;
- Fig. 15:: Skizze der Gesamtstruktur von Ausführungsbeispiel 15.

### Ausführungsbeispiel 1:

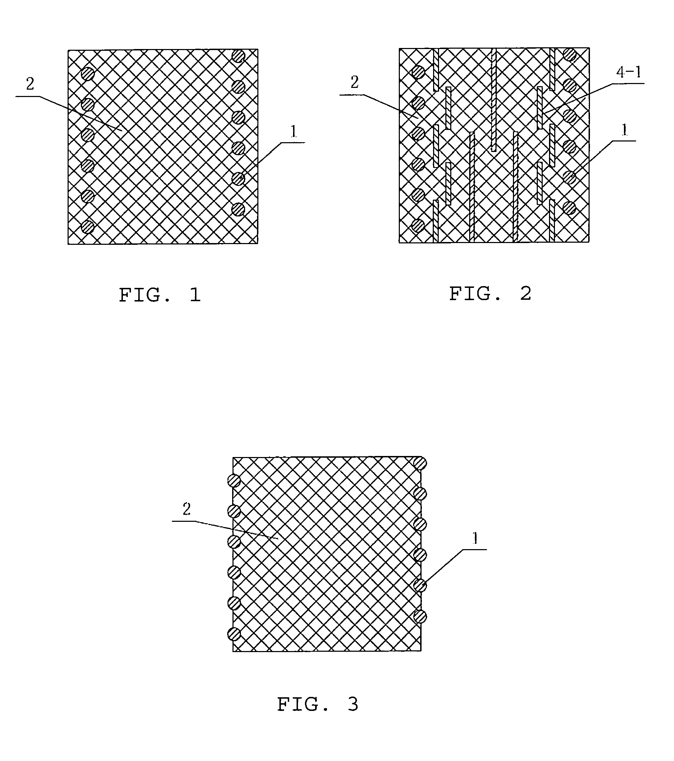

Die gesamte Struktur des Ausführungsbeispiels 1 der Erfindung ist in der Fig. 1 dargestellt. Sie besteht aus der Spiralfeder 1 und dem Dämpfungskörper 2, wobei die gesamte Spiralfeder 1 in den zylinderförmigen Dämpfungskörper 2 eingefügt ist. Der Dämpfungskörper 2 besteht aus modifiziertem Bitumen, das bei normaler Temperatur ein Festkörper ist und sich visko-plastisch beziehungsweise visko-elastisch verhält. Wenn die Feder sich unter Belastung verformt, verformt sich gleichzeitig der Dämpfungskörper. Weil das Dämpfungsmaterial eine starke innere Reibung aufweist, kann es eine zur Bewegungsrichtung gegenphasige Dämpfungskraft erzeugen, so dass die Feder gemäß diesem Ausführungsbeispiel eine größere Dämpfung hat. Die meisten massiven Materialien (ohne Poren) sind nahezu inkompressibel. Deshalb wird die Verformung des Dämpfungskörpers in der Feder begrenzt und die Steifigkeitskennlinie ist nicht linear. Allerdings erhöhen sich die Steifigkeit und die Tragfähigkeit. Die Struktur nach dem Ausführungsbeispiel ist besonders für schwere Belastungen geeignet.

### Ausführungsbeispiel 2:

Wie in der Fig. 2 dargestellt, sind bei diesem Ausführungsbeispiel in den Dämpfungskörper 2 gemäß Ausführungsbeispiel 1 noch zusätzliche Elemente eingefügt, z.B. stabförmige Körper oder Ringe aus Metall 4-1. Die stabförmigen Körper oder die Metallringe sind wechselweise beziehungsweise versetzt angeordnet, so dass bei der Verformung der Feder in dem Dämpfungskörper größere Widerstandsreibung und mehr Scherspannung gegen die Feder erzeugt wird. Weil eine Vergrößerung des Scherverformungsanteils des Dämpfungskörpers die Dämpfungswirkung erhöht, ist die Dämpfung in diesem Ausführungsbeispiel größer als beim Ausführungsbeispiel 1.

### Ausführungsbeispiel 3:

Verglichen mit dem Ausführungsbeispiel 1, ist bei dieser Ausführungsform nur ein Teil der Feder 1 in den Dämpfungskörper 2 eingefügt. Im Grunde entspricht das Ausführungsbeispiel 3 dem Ausführungsbeispiel 1, ist aber einfacher herstellbar. Die Struktur ist in Fig. 3 dargestellt.

### Ausführungsbeispiel 4:

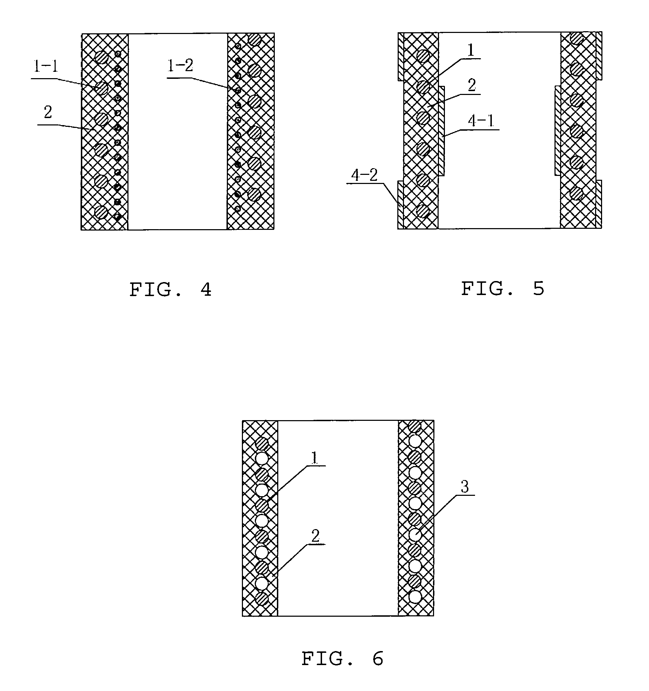

Ausführungsbeispiel 4 der Erfindung ist in der Fig. 4 dargestellt. Der hohlzylindrische Dämpfungskörper 2 besteht aus Gummi mit hoher Dämpfung.

Die Feder 1 besteht aus den Spiralfedern 1-1 und 1-2. Die Feder 1 ist in den Dämpfungskörper 2 vollständig eingebettet. Der Dämpfungskörper 2 und die Feder 1 sind koaxial angeordnet. Im Vergleich zu den Ausführungsbeispielen 1 und 2 ist der Dämpfungskörper 2 wegen der Hohlräume leicht zu verformen, wodurch die Linearität der Steifigkeitskennlinie verbessert wird.

### Ausführungsbeispiel 5:

Ausführungsbeispiel 5 gemäß Fig. 5 basiert auf dem Ausführungsbeispiel 4. Die Feder 1 ist eine Spiralfeder, welche vollständig in den hohlzylindrischen Dämpfungskörper 2 eingefügt ist. Der Dämpfungskörper 2 ist ein Festkörper aus modifiziertem Bitumen mit hoher Dämpfung. Auf dem Dämpfungskörper 2 sind ein innerer und äußerer Schubwiderstandsring angebracht. Der äußere Schubwiderstandring 4-2 ist elastisch, während der innere Schubwiderstandring 4-1 starr ist. Die beiden Ringe sind gegeneinander axial versetzt, wechselweise angeordnet. Sie haben eine Begrenzungs- und Scherwirkung auf den Dämpfungskörper bei dessen Verformung. Außerdem haben die Begrenzungsringe an beiden Enden eine zentrierende Wirkung. Fig. 5 zeigt die Struktur des Ausführungsbeispiels.

### Ausführungsbeispiel 6:

Ausführungsbeispiel 6 der Erfindung ist in der Fig. 6 dargestellt. Die gesamte Spiralfeder 1 ist in den hohlzylindrischen Dämpfungskörper 2 eingefügt. Der Dämpfungskörper besteht aus Polyurethan mit starker Dämpfung. Zwischen den Federdrähten gibt es in der Verformungsrichtung spiralförmige Hohlräume 3 oder Räume, die mit einem weichen elastischen Material gefüllt sind. Hierdurch können das Ausquetschen des Dämpfungskörpers und eine Zerstörung vermieden werden, wenn die Feder sich stark verformt. Weiterhin werden hierdurch mehr Scherverformung und weniger Zusammenpressen hervorgerufen. Im Vergleich zu Ausführungsbeispiel 4 werden hierdurch die Linearität der Steifigkeitskennlinie und die Dämpfung verbessert.

### Ausführungsbeispiel 7:

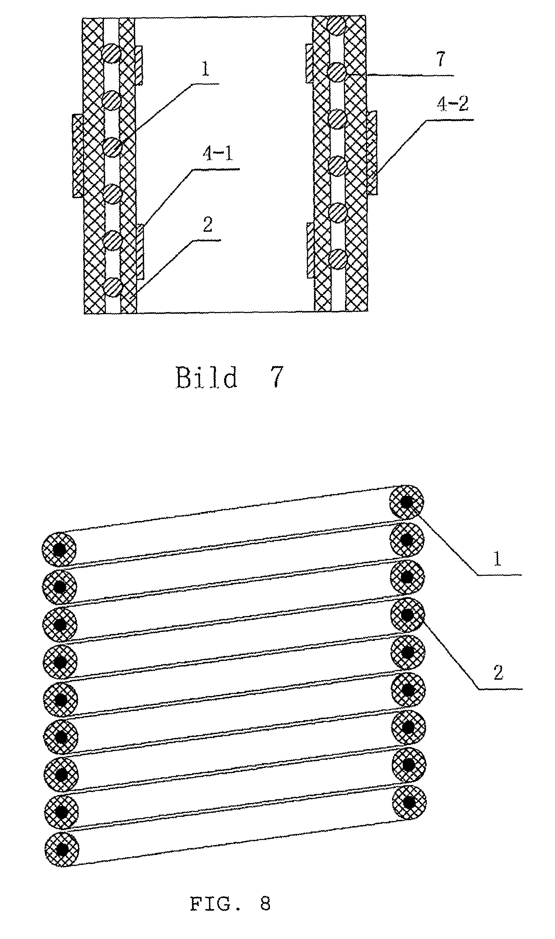

Ausführungsbeispiel 7 der Erfindung ist in der Fig. 7 dargestellt. Der Dämpfungskörper 2 besteht aus je einer inneren und äußeren röhrenförmigen Gummihülse mit hoher Dämpfung. Die Spiralfeder 1 ist in dem Hohlspalt 7 angeordnet. Um eine radiale Ausweitung des Dämpfungskörpers 2 zu verhindern, ist der Schubwiderstandsring 4 vorgesehen, der aus dem inneren Stahlring 4-1 und dem äußeren elastischen Ring 4-2 aus Kunststoff besteht. Die gesamte Höhe der Schubwiderstandsringe sollte kleiner sein, als die kleinste Arbeitshöhe der Feder. Die Schubwiderstandringe bilden für die Feder eine radiale Begrenzung, wobei durch diese auf dem Dämpfungskörper angeordnete radiale Begrenzung die Dämpfungskraft des Dämpfungskörpers erhöht wird, so dass die dämpfende Wirkung des Dämpfungskörpers auf die Feder 1 sichergestellt ist.

In diesem Ausführungsbeispiel sind Vulkanisierung und Guss nicht erforderlich, wodurch die Feder leichter hergestellt werden kann. Allerdings kann der Dämpfungskörper nach langfristigem Gebrauch verschleißen. Um diesen Nachteil zu vermeiden, kann die Feder auch auf die beiden Gummihülsen vulkanisiert werden.

### Ausführungsbeispiel 8:

Ausführungsbeispiel 8 der Erfindung ist in der Fig. 8 dargestellt. Die Außenfläche des Federdrahts der Spiralfeder 1 ist hier mit einer Schicht eines Dämpfungsmittels 2 beschichtet, bei dem es sich beispielsweise um modifiziertes Bitumen mit einer hohen Dämpfung handelt. Bei dieser Struktur ist die Dämpfung kleiner, aber die Linearität der Steifigkeitskennlinie deutlich besser. Außerdem kann eine solche Ausführung die Eigenresonanzschwingungen der Feder stark dämpfen. Um die Dämpfung weiter zu erhöhen, kann eine steifere beziehungsweise eine harte Schubwiderstandsschicht auf den Dämpfungskörper aufgebracht werden. Eine solche Ausführungsform ist geeignet für Federn mit kleiner Dämpfung oder für Federn für große Verformungen.

### Ausführungsbeispiel 9:

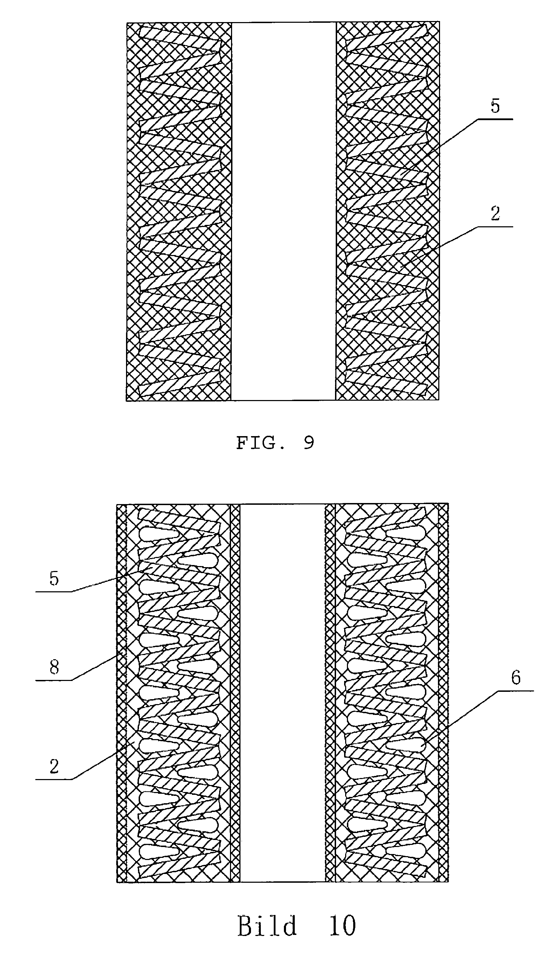

Ausführungsbeispiel 9 der Erfindung ist der Fig. 9 dargestellt. Die Feder ist eine Tellerfeder 5, die aus mehreren Einzelfedern besteht und vollständig von dem hohlzylindrischen Dämpfungskörper 2 umgeben ist. Wenn die Tellerfedern sich verformen, wird der Dämpfungskörper 2 auf Scherung und Zusammendrücken beansprucht. Wegen des Hohlraums im der Mitte des Dämpfungskörpers 2 lässt sich der Dämpfungskörper 2 leicht verformen.

### Ausführungsbeispiel 10:

Ausführungsbeispiel 10 der Erfindung ist der Fig. 10 dargestellt. Die aus mehreren Einzelfedern zusammengesetzte Tellerfeder 5 ist vollständig in den hohlzylindrischen Dämpfungskörper 2 eingebettet. Zwischen den Einzelfedern gibt es einen ringförmigen Hohlraum 6. Deshalb ist der Dämpfungskörper sehr leicht zu verformen. Die Linearität der Steifigkeitskennlinie und die Dämpfung sind dadurch gegenüber dem Ausführungsbeispiel 9 wesentlich verbessert. Auf der inneren und äußeren Fläche des Dämpfungskörpers ist eine Schicht aus elastischem Material als Schutzschicht 8 aufgebracht. Diese Schicht ist von Vorteil hinsichtlich der Rücksstellung des Dämpfungsmaterials bei Entlastung und schützt das Dämpfungsmaterial gegen Reibung und Stöße von außen.

### Ausführungsbeispiel 11:

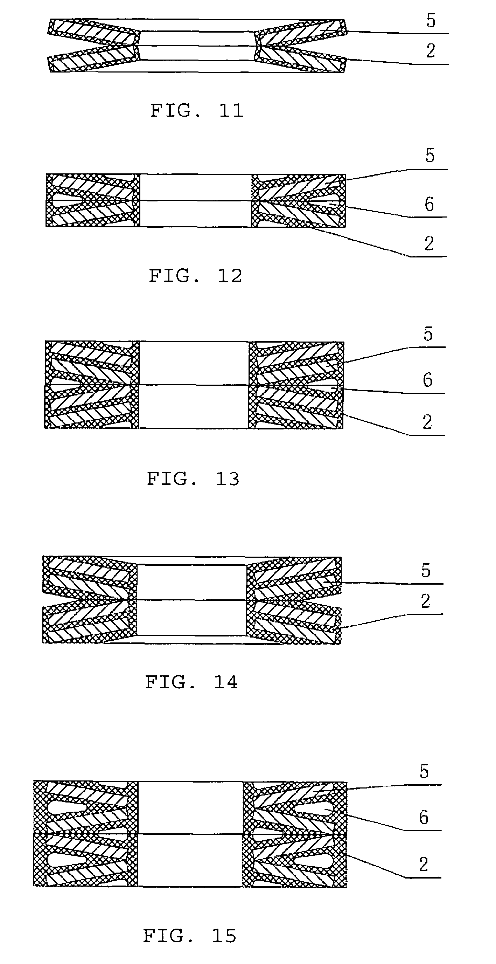

Ausführungsbeispiel 11 der Erfindung ist in der Fig. 11 dargestellt. Die einzelnen Tellerfederscheiben sind in den Dämpfungskörper 2 eingebettet, dessen Querschnitt den Federn ähnlich ist. In dem Kontaktbereich der Federscheiben gibt es kein Dämpfungsmittel. Dadurch können permanente plastische Verformung und eine Zerstörung des Dämpfungskörpers beim Zusammendrücken vermieden werden. Diese Ausführung hat geringen Einfluss auf die Linearität der Steifigkeitskennlinie und ist geeignet für Fälle, bei denen die Anforderungen an die Dämpfung niedrig aber die an die Linearität hoch sind. Das Ausführungsbeispiel besteht aus einzelnen Federscheiben und ist für die Großserienfertigung geeignet. Um den Dämpfungskörper in Großserie herzustellen, sollte ein Dämpfungsmaterial gewählt werden, das spritzlackiert, tauchlackiert, beschichtet oder gegossen werden kann, z.B. Polyurethan mit starker Dämpfung.

### Ausführungsbeispiel 12:

Wie in der Fig. 12 dargestellt, basiert dieses Ausführungsbeispiel auf dem Ausführungsbeispiel 11, wobei aber der Dämpfungskörper 2 ein hohler Zylinder ist, der einfacher herstellbar ist. Auf der oberen und unteren Fläche gibt es ringförmige Rillen. Damit wird der Dämpfungskörper im Druckbereich entlastet und eine starke Nichtlinearität der Federsteifigkeit der Tellerfeder vermieden.

### Ausführungsbeispiel 13:

Zwei Tellerfederscheiben 5 sind in gleicher Richtung gestapelt (parallele Steifigkeit) und in den Dämpfungskörper eingebettet. Der Dämpfungskörper 2 ist ein hohler Zylinder. Zwischen den Federscheiben 5 ist ein Dämpfungsmittel vorgesehen. Je zwei Federkomplexe sind in Reihe aufeinander gesetzt. Fig. 13 zeigt die Struktur.

### Ausführungsbeispiel 14:

Dieses Ausführungsbeispiel basiert auf dem Ausführungsbeispiel 13. Zwei Tellerfederscheiben 5 sind in gleicher Richtung gestapelt (parallele Steifigkeit) und in denselben Dämpfungskörper 2 eingebettet. Der Querschnitt des Dämpfungskörpers 2 ist dem der Federblätter 5 ähnlich. Zwischen den Federscheiben 5 ist Dämpfungsmaterial vorgesehen. Zwei Federkomplexe sind zueinander in Reihe geschaltet.

### Ausführungsbeispiel 15:

Ausführungsbeispiel 15 der Erfindung ist in der Fig. 15 dargestellt. Zwei Tellerfederscheiben 5 sind in entgegengesetzter Richtung gestapelt (Reihenschaltung mit höherer Steifigkeit) und in denselben Dämpfungskörper 2 eingebettet. Der Dämpfungskörper 2 ist ein hohler Zylinder. Zwischen den Federscheiben 5 ist Dämpfungsmittel vorgesehen und es sind ein Hohlraum 6 zwischen den Federscheiben 5 sowie Hohlrillen auf der oberen und unteren Seite ausgebildet. Die beiden Federscheiben sind in Reihe gesetzt.

Die unterschiedlichen Ausführungsbeispiele 11 bis 15 wurden erläutert, weil die mechanischen Eigenschaften der Tellerfeder durch die Anordnung der Tellerfederscheiben beeinflusst werden. Wenn die Tellerfederscheiben in der gleichen Richtung gestapelt werden, sind die Federsteifigkeiten parallel geschaltet, so dass sich die gesamte Steifigkeit verdoppelt. Werden die Tellerfederscheiben in entgegengesetzter Richtung gestapelt, sind die Federsteifigkeiten in Reihe geschaltet, so dass sich die gesamte Steifigkeit halbiert. Aufgrund dieser Eigenschaft können in der Praxis verschiedene Kombination von Federscheiben und Federkörpern eingesetzt werden.

Die meisten Dämpfungsmaterialien sind nicht kompressibel. Wenn viel Dämpfungsmaterial im Druckbereich des Dämpfungskörpers gestaucht wird, wird der Dämpfungskörper senkrecht zur Kraftrichtung verdrückt. Demzufolge ist die Verformungskennlinie der Feder nicht linear und der Dämpfungskörper kann wegen starker Verformung beschädigt werden. Dies kann vermieden werden, wenn der Dämpfungskörper mit Hohlräumen oder aus einem weichen elastischen Material hergestellt wird oder wenn eine hochfeste elastische Außenschicht vorgesehen wird.

## Patentansprüche

1. Zusammengesetzte Feder, **dadurch gekennzeichnet, dass** diese aus der eigentlichen Feder und einem Dämpfungskörper besteht, welcher ein Dämpfungsmaterial enthält, das eine dämpfende Wirkung auf die Bewegung der Feder hat.

2. Zusammengesetzte Feder nach Patentanspruch 1, **dadurch gekennzeichnet, dass** mindestens ein Teil der Feder in den Dämpfungskörper eingebettet ist.

3. Zusammengesetzte Feder nach Patentanspruch 2, **dadurch gekennzeichnet, dass** der Dämpfungskörper Zusätze beinhaltet, die bei einer Federverformung den Verformungswiderstand beziehungsweise den Scherverformungsanteil im Dämpfungskörper erhöhen.

4. Zusammengesetzte Feder nach Patentanspruch 2 und 3, **dadurch gekennzeichnet, dass** der Dämpfungskörper ein massiver Zylinder oder eine massive Scheibe ist.

5. Zusammengesetzte Feder nach Patentanspruch 2 und 3, **dadurch gekennzeichnet, dass** der Dämpfungskörper ein hohler Zylinder oder ein Ring ist.

6. Zusammengesetzte Feder nach Patentanspruch 5, **dadurch gekennzeichnet, dass** ein starrer oder elastischer Schubwiderstandskörper um den Dämpfungskörper oder innerhalb des Dämpfungskörpers angeordnet ist, der den Verformungswiderstand des Dämpfungskörpers und den Scherverformungsanteil im Dämpfungskörper erhöht.

7. Zusammengesetzte Feder nach Patentanspruch 2, **dadurch gekennzeichnet, dass** die eigentliche Feder eine Spiralfeder ist und zwischen den Federwendeln einen Hohlraum oder ein elastisches Material aufweist.

8. Zusammengesetzte Feder nach Patentanspruch 2, **dadurch gekennzeichnet, dass** die eigentliche Feder eine Tellerfeder ist und zwischen den Federscheiben Hohlräume oder ein weichelastisches Material oder an der Außenfläche des Dämpfungskörpers Hohlrillen vorgesehen sind.

9. Zusammengesetzte Feder nach Patentanspruch 1, 2 oder 3, **dadurch gekennzeichnet, dass** mehrere Federn im Reihe oder parallel geschaltet sind.

10. Zusammengesetzte Feder nach Patentanspruch 1, **dadurch gekennzeichnet, dass** eine Dämpfungsschicht mindestens auf einem Teil der Außenfläche der Spiralfeder oder Tellerfeder angebracht und auf der Dämpfungsschicht noch eine steife Schubwiderstandschicht vorgesehen ist.
